# EUROPÄISCHE PATENTSCHRIFT

(11) **EP 3 718 861 B1**
(45) Veröffentlichungstag und Bekanntmachung des Hinweises auf die Patenterteilung: **16.11.2022**
(21) Anmeldenummer: 20164615.5
(22) Anmeldetag: 20.03.2020
(51) Int. Cl.: B62D 9/00, B60G 9/02, B60G 17/016

(54) **LENKEINRICHTUNG FÜR EIN LANDWIRTSCHAFTLICHES FAHRZEUG**
STEERING DEVICE FOR AGRICULTURAL VEHICLE
DISPOSITIF DE DIRECTION POUR UN VÉHICULE AGRICOLE

(30) Priorität: 02.04.2019 DE 102019204674
(43) Veröffentlichungstag der Anmeldung: 07.10.2020
(73) Patentinhaber: Deere & Company, Moline, IL 61265 (US)
(72) Erfinder: Zwanzger, Matthias, 68163 Mannheim (DE)
(74) Vertreter: Dehnhardt, Florian Christopher

(56) Entgegenhaltungen:
- EP-A1- 3 339 137
- EP-A2- 2 042 407
- EP-A2- 2 886 419

## Beschreibung

Die Erfindung betrifft eine Lenkeinrichtung für ein landwirtschaftliches Fahrzeug, mit einer pendelnd und/oder federnd aufgehängten Fahrzeugachse und einer Betätigungseinrichtung zur fahrerseitigen Beeinflussung eines an lenkbaren Rädern der Fahrzeugachse einstellbaren Lenkeinschlags. Eine Lenkeinrichtung gemäß dem Oberbegriff des unabhängigen Anspruchs wird in Dokument EP 2 86 416 A2 offenbart.

Je nach Auslenkung einer an der Fahrzeugachse fahrtbedingt auftretenden Pendel- bzw. Einfederbewegung kann es beim Einlenken der lenkbaren Räder zu einem unerwünschten Kontakt zwischen zugehörigen Fahrzeugreifen und umliegenden Karosseriebauteilen des landwirtschaftlichen Fahrzeugs kommen. Im Falle eines als landwirtschaftlicher Traktor ausgebildeten landwirtschaftlichen Fahrzeugs betrifft dies in erster Linie eine den lenkbaren Vorderrädern benachbarte Motorhaube. Je nach Lenkeinschlag kann diese bei einer Kollision mit den sich drehenden Vorderrädern schwer beschädigt werden. Es besteht daher ein Bedürfnis nach einer an die Verhältnisse einer pendelnd bzw. federnd gelagerten Fahrzeugachse angepassten Lenkeinrichtung der eingangs genannten Art.

Diese Aufgabe wird durch eine Lenkeinrichtung mit den Merkmalen des Patentanspruchs 1 gelöst.

Die Lenkeinrichtung für ein landwirtschaftliches Fahrzeug umfasst eine pendelnd und/oder federnd aufgehängte Fahrzeugachse und eine Betätigungseinrichtung zur fahrerseitigen Beeinflussung eines an lenkbaren Rädern der Fahrzeugachse einstellbaren Lenkeinschlags. Erfindungsgemäß sind Mittel zur aktiven Begrenzung eines an der Fahrzeugachse auftretenden Pendelwinkels und/oder Einfederwegs vorhanden, die eine Kontrolleinheit nach Maßgabe eines an den lenkbaren Rädern fahrtbedingt zu erwartenden Voll-Lenkeinschlags ansteuert.

Unter einem Voll-Lenkeinschlag ist hierbei ein an den lenkbaren Rädern maximal hervorrufbarer Lenkeinschlag zu verstehen. Dieser entspricht einem minimal möglichen Wendekreis des betreffenden landwirtschaftlichen Fahrzeugs.

Durch entsprechende Begrenzung des Pendelwinkels und/oder Einfederwegs lässt sich die Möglichkeit eines unerwünschten Kontakts zwischen den Fahrzeugreifen und umliegenden Karosseriebauteilen des landwirtschaftlichen Fahrzeugs beim Einlenken ausschließen. Bei den Mitteln zur aktiven Begrenzung kann es sich um einen elektrischen oder hydraulischen Stellgeber handeln, mittels dessen sich der maximal zulässige Pendelwinkel und/oder Einfederweg durch Eingreifen in eine der Fahrzeugachse zugeordnete hydraulische Federungseinrichtung oder dergleichen anpassen lässt.

Bei dem landwirtschaftlichen Fahrzeug handelt es sich beispielsweise um einen landwirtschaftlichen Traktor mit einer um eine Fahrzeuglängsachse pendelnd und zugleich entlang einer Fahrzeughochachse federnd aufgehängten Vorderachse, an deren stirnseitigen Enden sich lenkbare Vorderräder befinden. Die Lenkung der Vorderräder erfolgt typischerweise mittels einer in einer Fahrerkabine befindlichen Lenkhandhabe in Gestalt eines Lenkrads, die Bestandteil der mit den lenkbaren Vorderrädern zusammenwirkenden Betätigungseinrichtung ist.

Vorteilhafte Weiterbildungen der erfindungsgemäßen Lenkeinrichtung gehen aus den Unteransprüchen hervor.

Ein unerwünschter Kontakt der lenkbaren Räder mit den umliegenden Karosseriebauteilen des landwirtschaftlichen Fahrzeugs lässt sich insbesondere dann ausschließen, wenn die aktive Begrenzung derart erfolgt, dass der maximal zulässige Pendelwinkel und/oder Einfederweg gegenüber baulich fest vorgegebenen Endanschlägen zusätzlich verringert wird.

Ein Voll-Lenkeinschlag ist typischerweise im Zusammenhang mit Wendemanövern oder Rangiervorgängen des landwirtschaftlichen Fahrzeugs zu erwarten. Es ist daher von Vorteil, wenn die Ansteuerung der Mittel im Sinne einer aktiven Begrenzung des Pendelwinkels und/oder Einfederwegs seitens der Kontrolleinheit dann erfolgt, wenn die Kontrolleinheit aufgrund charakteristischer Anzeichen auf die bevorstehende Durchführung eines Wendemanövers oder Rangiervorgangs schließt.

Derartige charakteristische Anzeichen ergeben sich unter anderem aufgrund von mit einer aktuellen Fahrzeugposition verglichenen Fahrtwegdaten, des Betriebszustands eines Vorgewendemanagementsystems, von charakteristischen Lenkbewegungen an einer zur Beeinflussung des Lenkeinschlags vorgesehenen Lenkhandhabe und/oder einer charakteristischen Fahrzeuggeschwindigkeit. Die Fahrtwegdaten können hierbei kartografisch dokumentierte Feldranddaten einschließlich des Verlaufs eines zugehörigen Vorgewendes enthalten.

So steht die Durchführung eines Wendemanövers absehbar bevor, wenn sich aufgrund des Betriebszustands des Vorgewendemanagementsystems bzw. der aktuellen Fahrzeugposition auf ein bevorstehendes Durchfahren des Vorgewendes im Feldrandbereich schließen lässt.

Andererseits kann anhand der aktuellen Fahrzeugposition ebenso gut auf einen Hofaufenthalt geschlossen werden, wobei sich je nach Fahrtgeschwindigkeit und Lenkbewegungen Hinweise auf einen dort ausgeführten Rangier- bzw. Ladebetrieb mittels eines Frontladers oder dergleichen ergeben. So sind in einem solchen Fall vergleichsweise geringe Fahrtgeschwindigkeiten im Bereich von wenigen Stundenkilometern in Verbindung mit ausgeprägten Lenkeinschlägen sowie häufigen Fahrtrichtungswechseln typisch.

Abgesehen von einer solchermaßen vorgenommenen automatisierten Begrenzung besteht ebenso die Möglichkeit, dass die Ansteuerung der Mittel im Sinne einer aktiven Begrenzung des Pendelwinkels und/oder Einfederwegs seitens der Kontrolleinheit dann erfolgt, wenn diese das Vorliegen eines über eine Eingabeeinheit geäußerten Bedienerwunsches feststellt.

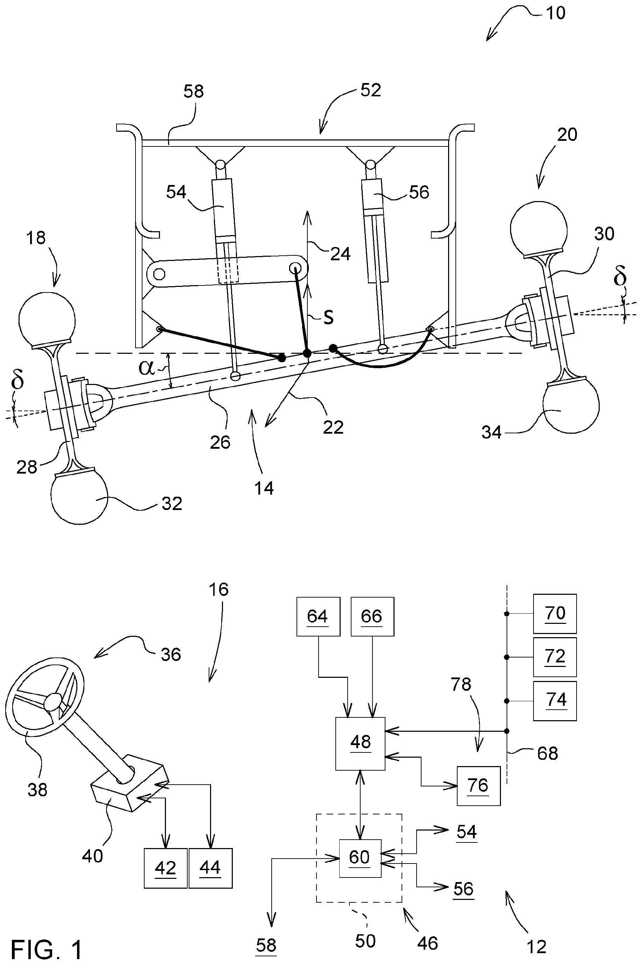

Die erfindungsgemäße Lenkeinrichtung für ein landwirtschaftliches Fahrzeug wird im Folgenden anhand der beigefügten Zeichnung näher erläutert. Dabei zeigt die einzige Figur ein schematisch wiedergegebenes Ausführungsbeispiel der erfindungsgemäßen Lenkeinrichtung eines als (nicht explizit dargestellter) landwirtschaftlicher Traktor ausgebildeten landwirtschaftlichen Fahrzeugs.

Die als Bestandteil des landwirtschaftlichen Traktors 10 vorgesehene Lenkeinrichtung 12 umfasst eine pendelnd und/oder federnd aufgehängte Fahrzeugachse 14 und eine Betätigungseinrichtung 16 zur fahrerseitigen Beeinflussung eines an lenkbaren Rädern 18, 20 der Fahrzeugachse 14 einstellbaren Lenkeinschlags δ. Genauer gesagt ist die Fahrzeugachse 14 als um eine Fahrzeuglängsachse 22 pendelnd und zugleich entlang einer Fahrzeughochachse 24 federnd aufgehängte Vorderachse 26 ausgebildet, an deren stirnseitigen Enden sich lenkbare Vorderräder 28, 30 mit zugehörigen Vorderreifen 32, 34 befinden. Die Lenkung der Vorderräder 28, 30 erfolgt mittels einer in einer Fahrerkabine befindlichen Lenkhandhabe 36 in Gestalt eines Lenkrads 38, das Bestandteil der mit den lenkbaren Vorderrädern 28, 30 zusammenwirkenden Betätigungseinrichtung 16 ist. Hierbei umfasst die Betätigungseinrichtung 16 ferner ein mit dem Lenkrad 38 verbundenes Lenkorbitrol 40, das der Betätigung zugehöriger Lenkzylinder 42, 44 zur Veränderung des Lenkeinschlags δ an den lenkbaren Vorderrädern 28, 30 dient.

Des Weiteren sind Mittel 46 zur aktiven Begrenzung eines an der Vorderachse 26 auftretenden Pendelwinkels α und/oder Einfederwegs s vorhanden, die eine mikroprozessorgesteuerte Kontrolleinheit 48 nach Maßgabe eines an den lenkbaren Vorderrädern 28, 30 fahrtbedingt zu erwartenden Voll-Lenkeinschlags δₘₐₓ ansteuert.

Bei den Mitteln 46 zur aktiven Begrenzung handelt es sich um einen elektrischen Stellgeber 50, mittels dessen sich der maximal zulässige Pendelwinkel αₘₐₓ und/oder Einfederweg sₘₐₓ durch Eingreifen in eine der Vorderachse 26 zugeordnete hydraulische Federungseinrichtung 52 anpassen lässt. Die Federungseinrichtung 52 ist vorliegend durch hydraulische Federbeine 54, 56 veranschaulicht, an denen die Vorderachse 26 gegenüber einer tragenden Fahrzeugstruktur 58 aufgehängt ist, wobei der elektrische Stellgeber 50 zur Begrenzung des Pendelwinkels α und/oder Einfederwegs s als elektromechanische Steuerventilanordnung 60 ausgestaltet ist, mittels derer sich bei Erreichen eines maximal zulässigen Pendelwinkels αₘₐₓ und/oder Einfederwegs sₘₐₓ auf Veranlassung der Kontrolleinheit 48 ein Hydraulikölfluss zwischen zugehörigen Arbeitskammern der Federbeine 54, 56 und einem Hydrauliksystem 62 im Sinne einer Blockierung der Federbeine 54, 56 unterbrechen lässt.

Durch entsprechende Begrenzung des Pendelwinkels α und/oder Einfederwegs s lässt sich die Möglichkeit eines unerwünschten Kontakts zwischen den Vorderreifen 32, 34 und umliegenden Karosseriebauteilen des landwirtschaftlichen Traktors 10 beim Einlenken ausschließen. Dies ist insbesondere dann der Fall, wenn die aktive Begrenzung derart erfolgt, dass der maximal zulässige Pendelwinkel αₘₐₓ und/oder Einfederweg sₘₐₓ gegenüber baulich fest vorgegebenen Endanschlägen zusätzlich verringert wird.

Ein Voll-Lenkeinschlag δₘₐₓ ist typischerweise im Zusammenhang mit Wendemanövern oder Rangiervorgängen des landwirtschaftlichen Traktors 10 zu erwarten. Dementsprechend erfolgt die Ansteuerung des Stellgebers 50 im Sinne einer aktiven Begrenzung des Pendelwinkels α und/oder Einfederwegs s seitens der Kontrolleinheit 48 dann, wenn die Kontrolleinheit 48 aufgrund charakteristischer Anzeichen auf die bevorstehende Durchführung eines Wendemanövers oder Rangiervorgangs schließt.

Zur Beurteilung, ob charakteristische Anzeichen für die bevorstehende Durchführung eines Wendemanövers oder Rangiervorgangs vorliegen, steht die Kontrolleinheit 48 mit einem sattelitengestützten Navigationssystem 64 zur Bereitstellung einer aktuellen Fahrzeugposition, einem kartografischen Speicher 66 mit Fahrtwegdaten und einem CAN-Bus 68 in Verbindung. Auf dem CAN-Bus 68 liegen Daten hinsichtlich der mittels zugehöriger Raddrehzahlsensoren 70 erfassten Raddrehzahlen, von an dem Lenkrad 38 ausgeführten Lenkbewegungen, die mittels eines Lenkwinkelsensors 72 erfasst werden, sowie des Betriebszustands eines Vorgewendemanagementsystems 74 an, wobei die Kontrolleinheit 48 aus den Raddrehzahlen wiederum Rückschlüsse auf die Fahrtgeschwindigkeit des landwirtschaftlichen Traktors 10 zieht. Die Fahrtwegdaten enthalten hierbei kartografisch dokumentierte Feldranddaten einschließlich des Verlaufs eines zugehörigen Vorgewendes.

So steht die Durchführung eines Wendemanövers absehbar bevor, wenn sich aufgrund des Betriebszustands des Vorgewendemanagementsystems 74 bzw. der aktuellen Fahrzeugposition auf ein bevorstehendes Durchfahren des Vorgewendes im Feldrandbereich schließen lässt.

Andererseits kann anhand der aktuellen Fahrzeugposition auch auf einen Hofaufenthalt geschlossen werden, wobei sich je nach Fahrtgeschwindigkeit und Lenkbewegungen Hinweise auf einen dort ausgeführten Rangier- bzw. Ladebetrieb mittels eines Frontladers oder dergleichen ergeben. So sind in einem solchen Fall vergleichsweise geringe Fahrtgeschwindigkeiten im Bereich von wenigen Stundenkilometern in Verbindung mit ausgeprägten Lenkeinschlägen sowie häufigen Fahrtrichtungswechseln typisch.

Abgesehen von einer automatisierten Begrenzung erfolgt die Ansteuerung des Stellgebers 50 im Sinne einer aktiven Begrenzung des Pendelwinkels α und/oder Einfederwegs s seitens der Kontrolleinheit 48 auch dann, wenn diese das Vorliegen eines über eine Eingabeeinheit 76 geäußerten Bedienerwunsches feststellt. Bei der Eingabeeinheit 76 handelt es sich beispielsgemäß um eine berührungsempfindliche Bedien- und Anzeigeeinheit 78.

## Patentansprüche

1. Lenkeinrichtung für ein landwirtschaftliches Fahrzeug, mit einer pendelnd und/oder federnd aufgehängten Fahrzeugachse (14) und einer Betätigungseinrichtung (16) zur fahrerseitigen Beeinflussung eines an lenkbaren Rädern (18, 20) der Fahrzeugachse (14) einstellbaren Lenkeinschlags (δ), und mit Mitteln (46) zur aktiven Begrenzung eines an der Fahrzeugachse (14) auftretenden Pendelwinkels (α) und/oder Einfederwegs (s), **dadurch gekennzeichnet, dass** eine Kontrolleinheit (48) die Mittel (46) nach Maßgabe eines an den lenkbaren Rädern (18, 20) fahrtbedingt zu erwartenden Voll-Lenkeinschlags (δₘₐₓ) ansteuert.

2. Lenkeinrichtung nach Anspruch 1, **dadurch gekennzeichnet, dass** die aktive Begrenzung derart erfolgt, dass der maximal zulässige Pendelwinkel (αₘₐₓ) und/oder Einfederweg (sₘₐₓ) gegenüber baulich fest vorgegebenen Endanschlägen zusätzlich verringert wird.

3. Lenkeinrichtung nach Anspruch 1 oder 2, **dadurch gekennzeichnet, dass** die Ansteuerung der Mittel (46) im Sinne einer aktiven Begrenzung des Pendelwinkels (α) und/oder Einfederwegs (s) seitens der Kontrolleinheit (48) dann erfolgt, wenn die Kontrolleinheit (48) aufgrund charakteristischer Anzeichen auf die bevorstehende Durchführung eines Wendemanövers oder Rangiervorgangs schließt.

4. Lenkeinrichtung nach Anspruch 3, **dadurch gekennzeichnet, dass** sich die charakteristischen Anzeichen aufgrund von mit einer aktuellen Fahrzeugposition verglichenen Fahrtwegdaten, des Betriebszustands eines Vorgewendemanagementsystems (74), von charakteristischen Lenkbewegungen an einer zur Beeinflussung des Lenkeinschlags (δ) vorgesehenen Lenkhandhabe (36) und/oder einer charakteristischen Fahrzeuggeschwindigkeit ergeben.

5. Lenkeinrichtung nach wenigstens einem der Ansprüche 1 bis 4, **dadurch gekennzeichnet, dass** die Ansteuerung der Mittel (46) im Sinne einer aktiven Begrenzung des Pendelwinkels (α) und/oder Einfederwegs (s) seitens der Kontrolleinheit (48) dann erfolgt, wenn diese das Vorliegen eines über eine Eingabeeinheit (76) geäußerten Bedienerwunsches feststellt.

6. Landwirtschaftliches Nutzfahrzeug, insbesondere landwirtschaftlicher Traktor (10), mit einer Lenkeinrichtung (12) nach wenigstens einem der Ansprüche 1 bis 5.

## Claims

1. Steering device for an agricultural vehicle, with a vehicle axle (14) which is suspended in a swing-mounted and/or sprung manner, and with an actuating device (16) for driver-side influencing of a steering lock (δ) which can be set at steerable wheels (18, 20) of the vehicle axle (14), and with means (46) for the active limitation of a swing angle (α) and/or suspension travel (s) occurring at the vehicle axle (14), **characterized in that** a control unit (48) actuates the means (46) in accordance with a full steering lock (δₘₐₓ) which is to be expected at the steerable wheels (18, 20) due to the route.

2. Steering device according to Claim 1, **characterized in that** the active limitation takes place in such a way that the maximum permissible swing angle (αₘₐₓ) and/or suspension travel (sₘₐₓ) is additionally decreased in comparison with structurally fixedly predefined end stops.

3. Steering device according to Claim 1 or 2, **characterized in that** the actuation of the means (46) in the sense of an active limitation of the swing angle (α) and/or suspension travel (s) on the part of the control unit (48) takes place when the control unit (48) extrapolates the imminent performance of a turning manoeuvre or shunting operation on the basis of characteristic indications.

4. Steering device according to Claim 3, **characterized in that** the characteristic indications result from route data which are compared with a current vehicle position, from the operating state of a headland management system (74), from characteristic steering movements on a steering handle (36) which is provided for influencing the steering lock (δ) and/or from a characteristic vehicle speed.

5. Steering device according to at least one of Claims 1 to 4, **characterized in that** the actuation of the means (46) in the sense of an active limitation of the swing angle (α) and/or suspension travel (s) on the part of the control unit (48) takes place when the said control unit (48) determines the presence of an operator request expressed via an input unit (76).

6. Agricultural utility vehicle, in particular agricultural tractor (10), with a steering device (12) according to at least one of Claims 1 to 5.

## Revendications

1. Dispositif de direction pour un véhicule agricole, avec un essieu de véhicule (14) suspendu de manière pendulaire et/ou élastique et un dispositif d'actionnement (16) pour influencer, du côté du conducteur, un angle de braquage (δ) réglable sur des roues dirigeables (18, 20) de l'essieu de véhicule (14), et avec des moyens (46) pour la limitation active d'un angle pendulaire (α) et/ou d'une course élastique (s) apparaissant sur l'essieu de véhicule (14), **caractérisé en ce qu'**une unité de contrôle (48) commande les moyens (46) en fonction d'un angle de braquage complet (δₘₐₓ) attendu sur les roues dirigeables (18, 20) en raison de la conduite.

2. Dispositif de direction selon la revendication 1, **caractérisé en ce que** la limitation active s'effectue de telle sorte que l'angle pendulaire (αₘₐₓ) et/ou la course élastique (sₘₐₓ) maximum admissible est réduit en plus par rapport aux butées de fin de course prédéfinies par la construction.

3. Dispositif de direction selon la revendication 1 ou 2, **caractérisé en ce que** la commande des moyens (46) dans le sens d'une limitation active de l'angle pendulaire (α) et/ou de la course élastique (s) de la part de l'unité de contrôle (48) a lieu lorsque l'unité de contrôle (48) conclut, sur la base de signes caractéristiques, à l'exécution imminente d'une manœuvre de changement de direction ou d'une manœuvre de stationnement.

4. Dispositif de direction selon la revendication 3, **caractérisé en ce que** les signes caractéristiques résultent de données de trajet comparées à une position actuelle du véhicule, de l'état de fonctionnement d'un système de gestion des manœuvres en fourrière (74), de mouvements de direction caractéristiques sur une manette de direction (36) prévue pour influencer l'angle de braquage (δ) et/ou d'une vitesse caractéristique du véhicule.

5. Dispositif de direction selon au moins l'une quelconque des revendications 1 à 4, **caractérisé en ce que** la commande des moyens (46) dans le sens d'une limitation active de l'angle pendulaire (α) et/ou de la course élastique (s) de la part de l'unité de contrôle (48) a lieu lorsque celle-ci constate la présence d'un souhait de l'utilisateur exprimé par une unité d'entrée (76) .

6. Véhicule utilitaire agricole, notamment tracteur agricole (10), avec un dispositif de direction (12) selon au moins l'une quelconque des revendications 1 à 5.
